(19) Europäisches Patentamt
European Patent Office
Office européen des brevets

(11) **EP 4 539 358 A1**

(12) **EUROPEAN PATENT APPLICATION**

(43) Date of publication:
16.04.2025 Bulletin 2025/16

(21) Application number: 23306770.1

(22) Date of filing: 11.10.2023

(51) International Patent Classification (IPC):
*H04B 10/079* (2013.01)

(52) Cooperative Patent Classification (CPC):
H04B 10/07955; H04B 10/07951

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(71) Applicants:
• Alcatel Submarine Networks
91620 Nozay (FR)
• Nokia Solutions and Networks Oy
02610 Espoo (FI)

(72) Inventors:
• BOITIER, Fabien
91300 Massy (FR)
• RAMANTANIS, Petros
92160 Antony (FR)
• ANTONA, Jean-Christophe
92330 Sceaux (FR)

(74) Representative: Novagraaf Technologies
Bâtiment O2
2, rue Sarah Bernhardt
CS90017
92665 Asnières-sur-Seine Cedex (FR)

(54) **JOINT FIBER MONITORING**

(57) A method comprising: obtaining samples of an optical signal received on an optical channel at an output of an optical link, the optical link comprising one or more fibers connected in series; generating, from the samples of the optical signal, a longitudinal power profile of the optical link for a wavelength of the optical channel, wherein the longitudinal power profile indicates a scaled optical power as a function of accumulated chromatic dispersion, the scaled optical power being optical power P times a coefficient which is constant over the length of each of the one or more fibers.

FIG. 1

**Description**

<u>TECHNICAL FIELD</u>

Various example embodiments relate generally to an apparatus and a method for monitoring parameters of an optical link .

<u>BACKGROUND</u>

Monitoring of parameters of an optical link comprising one or more fibers connected in series may require an identification of the fiber types and/ or knowledge of the length of the optical fibers.

<u>SUMMARY</u>

The scope of protection is set out by the independent claims. The embodiments, examples and features, if any, described in this specification that do not fall under the scope of the protection are to be interpreted as examples useful for understanding the various embodiments or examples that fall under the scope of protection.

According to a first aspect, a method comprises: obtaining samples of an optical signal received on an optical channel at an output of an optical link, the optical link comprising one or more fibers connected in series; generating, from the samples of the optical signal, a longitudinal power profile of the optical link for a wavelength of the optical channel, wherein the longitudinal power profile indicates a scaled optical power as a function of accumulated chromatic dispersion, the scaled optical power being optical power P times a coefficient which is constant over the length of each of the one or more fibers.

The method may comprises: determining a fiber type or a physical parameter of a fiber among the one or more fibers based on the longitudinal power profile.

The fiber type may be characterized by at least one of an effective area, a dispersion-normalized attenuation constant and a fiber dispersion slope.

The method may comprises: estimating a length of the fiber based on a chromatic dispersion parameter of the identified fiber type and chromatic dispersion accumulated in the fiber.

A logarithm of the scaled optical power may be a piecewise linear function of the accumulated chromatic dispersion.

Generating the optical power profile from the samples may comprise: generating a raw longitudinal power profile from the samples, and fitting a piecewise linear function to the raw longitudinal power profile.

The coefficient may be a fiber non-linear coefficient $\gamma$.

The coefficient may be defined, for a fiber among the one or more fibers, as $\gamma = \frac{2\pi}{\lambda} \cdot \frac{n_2}{A_{eff}}$ . where $\lambda$ is the wavelength of the optical channel, $A_{eff}$ is an effective area of the fiber, and $n_2$ is the nonlinear-index coefficient $n_2$ of the fiber.

The method may comprise one or both of the following: computing a dispersion-normalized attenuation constant for a fiber among the one or more fibers based on a logarithmic derivative of the scaled optical power with respect to the accumulated chromatic dispersion; or identifying a fiber type based on a logarithmic derivative of the scaled optical power with respect to the accumulated chromatic dispersion.

The method may comprise: computing, for a fiber among the one or more fibers, a first wavelength independent metric representing $m_3 = \log\left(\frac{n_2}{A_{eff}}\right) + log\left(P(CD_0)\right)$ , where $A_{eff}$ is an effective area of the fiber, $n_2$ is a nonlinear-index coefficient of the fiber, and $P(CD_0)$ is the optical power at a breakpoint of the longitudinal power profile.

The method may comprise: computing, for a fiber among the one or more fibers, values of a wavelength dependent metric representing an inverse of a logarithmic derivative of the scaled optical power with respect to the accumulated chromatic dispersion as a function of wavelength; and computing a derivative of the wavelength dependent metric with respect to the wavelength, the derivative representing a second wavelength independent metric $m_2$.

The method may comprise: identifying a fiber type based on at least one of the first wavelength independent metric $m_3$ and the second wavelength independent metric $m_2$.

The logarithmic derivative may be computed over at least one linear segment of the longitudinal power profile.

The method may comprise: detecting a negative step discontinuity in the longitudinal power profile; wherein the logarithmic derivative is computed over a first linear segment of the longitudinal power profile that ends at the negative step discontinuity and a second linear segment of the longitudinal power profile that starts at the negative step discontinuity.

According to another aspect, an apparatus comprises means (e.g. processing circuitry) for: obtaining samples of an optical signal received on an optical channel at an output of an optical link, the optical link comprising one or more fibers connected in series; generating, from the samples of the optical signal, a longitudinal power profile of the optical link for a wavelength of the optical channel, wherein the longitudinal power profile indicates a scaled optical power as a function of accumulated chromatic dispersion, the scaled optical power being optical power P times a coefficient which is constant over the length of each of the one or more fibers.

The apparatus may comprise means (e.g. processing circuitry) for performing one or more or all steps of the method according to the first aspect. The means or processing circuitry may include at least one processor and at least one memory storing instructions that, when executed by the at least one processor, cause the apparatus to perform one or more or all steps of a method according to the first aspect.

According to another aspect, an apparatus comprises at least one processor and at least one memory storing instructions that, when executed by the at least one processor, cause the apparatus to perform: obtaining samples of an optical signal received on an optical channel at an output of an optical link, the optical link comprising one or more fibers connected in series; generating, from the samples of the optical signal, a longitudinal power profile of the optical link for a wavelength of the optical channel, wherein the longitudinal power profile indicates a scaled optical power as a function of accumulated chromatic dispersion, the scaled optical power being optical power P times a coefficient which is constant over the length of each of the one or more fibers. The instructions, when executed by the at least one processor, may cause the apparatus to perform one or more or all steps of a method according to the first aspect.

According to another aspect, a computer program comprises instructions that, when executed by an apparatus, cause the apparatus to perform: obtaining samples of an optical signal received on an optical channel at an output of an optical link, the optical link comprising one or more fibers connected in series; generating, from the samples of the optical signal, a longitudinal power profile of the optical link for a wavelength of the optical channel, wherein the longitudinal power profile indicates a scaled optical power as a function of accumulated chromatic dispersion, the scaled optical power being optical power P times a coefficient which is constant over the length of each of the one or more fibers. The instructions may cause the apparatus to perform one or more or all steps of a method according to the first aspect.

According to another aspect, a non-transitory computer readable medium comprises program instructions stored thereon for causing an apparatus to perform at least the following: obtaining samples of an optical signal received on an optical channel at an output of an optical link, the optical link comprising one or more fibers connected in series; generating, from the samples of the optical signal, a longitudinal power profile of the optical link for a wavelength of the optical channel, wherein the longitudinal power profile indicates a scaled optical power as a function of accumulated chromatic dispersion, the scaled optical power being optical power P times a coefficient which is constant over the length of each of the one or more fibers. The program instructions may cause the apparatus to perform one or more or all steps of a method according to the first aspect.

## BRIEF DESCRIPTION OF THE DRAWINGS

Example embodiments will become more fully understood from the detailed description given herein below and the accompanying drawings, which are given by way of illustration only and thus are not limiting of this disclosure.

FIG. 1 shows a longitudinal power profile as a function of the accumulated chromatic dispersion according to an example.

FIG. 2 shows a longitudinal power profile as a function of the accumulated chromatic dispersion according to an example and illustrates mathematical aspects of the longitudinal power profile.

FIG. 3A-3C shows typical slope values for different fiber types at a given wavelength according to examples.

FIG. 4 is a flowchart illustrating a method for fiber type identification according to an example.

FIG. 5 is a table showing characterising parameters of fiber types according to examples.

FIG. 6 shows a block diagram of a system for generating a longitudinal power profile of an optical link as a function of accumulated chromatic dispersion according to an example.

FIG. 7 is a flowchart illustrating a method according to an example.

FIG. 8 is a block diagram illustrating an exemplary hardware structure of an apparatus according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

## DETAILED DESCRIPTION

Detailed example embodiments are disclosed herein. However, specific structural and/or functional details disclosed herein are merely representative for purposes of describing example embodiments and providing a clear understanding of the underlying principles. However these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

Each fiber used for an optical link may be characterized by parameters such as: its length $L[km]$, its power profile $P(z)$ ($z$ denotes the propagation distance) and fiber characteristics with attenuation constant $\alpha[1/km]$, the group velocity dispersion (GVD) parameter $\beta_2[ps^2/km]$ or chromatic dispersion parameter $D[ps/nm/km]$, the third order dispersion parameter $\beta_3[ps^3/km]$ or dispersion slope $D'[ps/nm^2/km]$ with respect to the wavelength, the effective area $A_{eff}[\mu m^2]$ and nonlinear-index coefficient $n_2[10^{-20}m^2/W]$.

The accumulated chromatic dispersion relates to the property or the tendency of the quantity of chromatic dispersion of an optical signal to accumulate along an optical link through which this optical signal is transmitted. Another equivalent term such as "cumulative chromatic dispersion" is also used in the technical domain. The chromatic dispersion is typically expressed in units of picoseconds per nanometer per kilometer (ps/nm/km) and represents the amount of delay, in picoseconds, that different wavelengths of light experience for each nanometer of wavelength difference over a kilometer of travel through an optical link.

A method for joint monitoring/identification of different standard fiber types used in an optical link is disclosed. The method uses a longitudinal optical power profile generated by post-processing a plurality of chunk recordings (CRs), i.e. collections of complex samples representing amplitude and phase of one or more optical signals received at a coherent receiver after propagation through the optical link is disclosed.

The optical signals may be transmitted through one or more optical channels and received, after propagation over the optical link, by an optical receiver (e.g. optical coherent receiver) at the output of the optical link. Each optical channel may correspond to at least one wavelength, for example a range of wavelengths having a central wavelength.

From the complex signal samples, a longitudinal power profile of the optical link is generated. The longitudinal power profile expresses variations along the optical link of the optical power as a function of the accumulated chromatic dispersion. This longitudinal power profile may be approximated by a piecewise linear function having breakpoints corresponding to longitudinal positions.

A longitudinal power profile of a point-to-point optical link may be described by one or more digital PPE-like vectors as a function of the link accumulated chromatic dispersion, acquired by processing CRs of one or more optical signals. The longitudinal power profile is generated as a function of the accumulated chromatic dispersion, rather than as a function of the longitudinal position or propagated distance.

Based on this longitudinal power profile, for each fiber in the optical link, the fiber type, length and its associated characteristics (e.g. effective area, dispersion attenuation normalized constant and fiber dispersion slope) can be determined without any a priori knowledge.

In one or more embodiments, the longitudinal power profile can then be used to compute metrics, extracted from the power profile and that correspond to features of the power profile, where the metrics are adapted to discriminate between different fiber types among standardized fiber types. Using these metrics, the fiber type and associated fiber characteristics can be retrieved. Thus, identifying each fiber in the optical link as one among the standardized fiber types can be achieved. The fiber characteristics that can be retrieved may include: an attenuation constant (which characterized the attenuation of the electromagnetic wave during its propagation in the optical fiber), a fiber dispersion slope, and the ratio between the nonlinear-index coefficient and the fiber effective area.

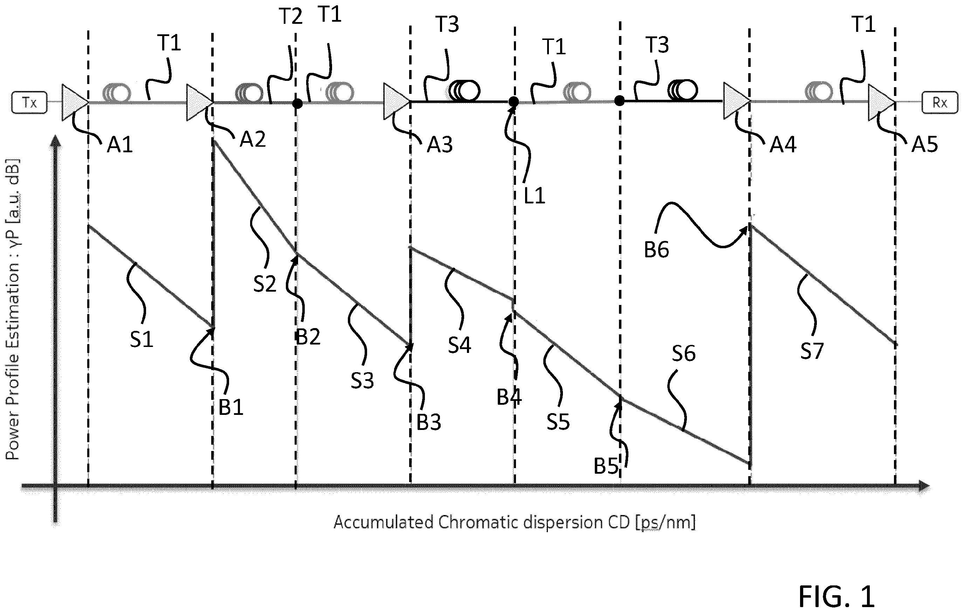

FIG. 1 shows a longitudinal power profile as a function of the accumulated chromatic dispersion according to an example. This is a qualitative example of longitudinal power profile like shape as a function the accumulated chromatic dispersion for distinct fiber types.

The longitudinal power profile has been obtained for a point-to-point optical link between a transmitter Tx and a receiver Rx with five optical amplifiers A1 to A5 and different interconnected fiber types T1, T2 and T3.

As can be seen from FIG. 1, the longitudinal power profile is a piecewise linear function of the accumulated chromatic dispersion. In this example, the piecewise linear function includes a succession of linear segments S1 to S7 separated by breakpoints B1 to B6. Different types of breakpoints may be present in the longitudinal power profile and each type of breakpoint corresponds to one of the following situations.

A first type of breakpoint corresponds a positive power step, i.e. to a longitudinal position at which a discontinuity occurs, where the discontinuity corresponds to a positive step to a higher optical power value due to the presence, at the considered longitudinal position, of an amplifier at an output of a fiber and an input of a subsequent fiber. In the example of FIG. 1, breakpoints B1, B3 and B6 indicate the presence of the optical amplifiers A2, A3 and A4 respectively.

A second type of breakpoint corresponds to a negative power step at a longitudinal position at which a discontinuity occurs, where the discontinuity corresponds to a negative step to a lower optical power value due to the presence, at the considered longitudinal position, of a defect in a fiber causing a power loss (e.g. lumped loss). In the example of FIG. 1, breakpoints B4 indicates the presence of a defect causing a power loss. This lumped loss may be due to a splice after a fiber cut, a connector, fiber bending, a defect of the fiber fabrication etc.

A third type of breakpoint corresponds to a longitudinal position at which no discontinuity (i.e. no power step) occurs, but only a change of slope between two successive linear segments: this breakpoint corresponds to a change of fiber type in the optical fiber link, where two fibers having different types are interconnected without the use of an optical amplifier inbetween. In FIG. 1, each of breakpoints B2 and B5 indicates the interconnection between a fiber of type T1 and a fiber of type T3.

The values of the optical power in the longitudinal power profile are optical power values $\gamma \cdot P$ expressed on a logarithmic scale and weighted by a fiber non-linear coefficient defined as

$$\gamma = \frac{2\pi}{\lambda} \cdot \frac{n_2}{A_{eff}} \tag{1}$$

where $\lambda$ is the wavelength, $A_{eff}$ is the effective area of the fiber, $n_2$ is the nonlinear-index coefficient of the fiber.

We assume here that $M$ optical channels sharing the optical link are monitored. For each optical channel with central wavelength $\lambda$, a chunk recording, CR, is extracted. Then, for each CR a PPE-like vector is calculated as a function of the accumulated chromatic dispersion.

Several computation methods may be used to generate a PPE-like vector, e.g. the fitting procedure of [1] or the correlation-based method of [2].

As discussed in [1], for an optical channel with central wavelength $\lambda$, these methods are expected to converge into the estimation of the (distributed) quantity $(\gamma \cdot P)$ as a function of the accumulated chromatic dispersion (CD).

Propagating over a small chunk of fiber considered not to contain any lumped loss anomalies, input propagation coordinate $z_0$ and generic coordinate $z$, the optical power is expected to follow the normal exponential decay as a function of z

$$P(z) = P(z_0)\exp\left[-\alpha(z - z_0)\right] \tag{2}$$

where $\alpha$ is the attenuation constant of the fiber expressed in units of $km^{-1}$. The accumulated chromatic dispersion over the same chunk of fiber is given as

$$CD(z) = CD(z_0) + D(\lambda) \cdot (z - z_0) \tag{3}$$

where $CD(z_0)$ designates the accumulated chromatic dispersion at the input of the fiber and $D(\lambda)$ is the chromatic dispersion parameter at the optical channel central wavelength, where $z_0$ is the longitudinal position corresponding to the start of the fiber. For the chromatic dispersion parameter we assume the relation

$$D(\lambda) = D(\lambda_0) + D'(\lambda - \lambda_0) \tag{4}$$

where D' is the dispersion slope with respect to the wavelength and is set for example to $\lambda_0 = 1550nm$.

Using equation (3) in equation (2) and assuming $D(\lambda) \neq 0$, we can rewrite equation (2) as a function of the accumulated chromatic dispersion as

$$P(CD(z)) = P\big(CD(z_0)\big) \exp\big(-\alpha_{D(\lambda)} \cdot (CD(z) - CD(z_0))\big) \tag{5}$$

where we define the dispersion-normalized attenuation constant as

$$\alpha_{D(\lambda)} = \frac{\alpha}{D(\lambda)} \tag{6}$$

expressed in units of $\frac{1}{ps/nm}$. Then, the PPE-like vector which is expected to be equal to the quantity $(\gamma \cdot P)$, using equations (1), (5) and (6), setting $CD = CD(z)$ and $CD_0 = CD(z_0)$, by expressing the PPE-like vector on a logarithmic scale reads, we obtain

$$log(\gamma\, P(CD)) = log\left(\frac{n_2}{A_{eff}}\right) - lo\, g(\lambda) + \log(2\pi) + \log\big(P(CD_0)\big) - \alpha_{D(\lambda)}(CD - CD_0) \qquad (7)$$

knowing that

$$log(\gamma\, P(CD)) = \log(\gamma) + log(P(CD)) \qquad (7A)$$

with

$$\log(\gamma) = log\left(\frac{n_2}{A_{eff}}\right) - lo\, g(\lambda) \qquad (7B)$$

and

$$log(P(CD)) = log(2\pi) + log\big(P(CD_0)\big) - \alpha_{D(\lambda)}(CD - CD_0)$$

Equation (7) is a piecewise linear function expressing the optical power $log(\gamma\, P)$ as a function of the accumulated chromatic dispersion CD. The term $-\alpha_{D(\lambda)}$ is a fiber attenuation constant and corresponds to the slope of the piecewise linear function for one linear continuous segment. The term:

$$log\left(\frac{n_2}{A_{eff}}\right) - lo\, g(\lambda) + \log(2\pi) + log\big(P(CD_0)\big)$$

is constant for a given fiber and a given wavelength $\lambda$, while the term $-lo\, g(\lambda)$ varies as a function of the optical channel central wavelength $\lambda$.

In real life, the longitudinal power profile may be noisy but nevertheless, a raw longitudinal power profile may be generated by expressing the quantity $\gamma \cdot P$ as a function of the accumulate chromatic dispersion and the various parameters used on equation (7) can be determined from a raw longitudinal power profile, e.g. by fitting a piecewise linear function to the raw longitudinal power profile .

For example, within one single fiber of the same type and between longitudinal positions of lumped loss anomalies and/or optical amplifier, the profile slope is governed by the term $[-\alpha_{D(\lambda)}(CD - CD_0)]$, i.e. as a function of the fiber attenuation constant $\alpha_{D(\lambda)}$, the fiber dispersion $D(\lambda)$ and the optical channel central wavelength $\lambda$.

At each longitudinal position z corresponding to amplifier locations, a breakpoint corresponding to a positive power step (i.e. a positive step discontinuity) is expected. The height of this power step depends on the term $log\big(P(CD_0)\big) + log\left(\frac{n_2}{A_{eff}}\right) -$ $lo\, g(\lambda)$, i.e. the amplifier output power $P(CD_0)$, the fiber effective area $A_{eff}$, the fiber nonlinear-index coefficient $n_2$ and the optical channel central wavelength $n_2$.

At each longitudinal position z corresponding to lumped losses, a breakpoint corresponding to a power negative step (i.e. a negative step discontinuity) is expected.

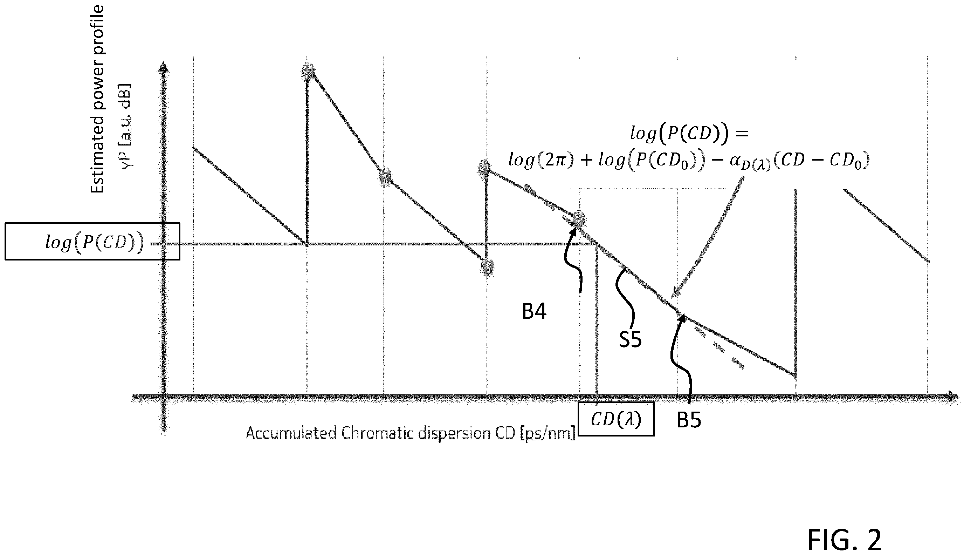

FIG. 2 shows a longitudinal power profile as a function of the accumulated chromatic dispersion according to the example of FIG. 1 and illustrates mathematical aspects of the longitudinal power profile obtained for a given wavelength.

FIG. 2 illustrates the computation of the slope and underlines the fact that the estimated slope of the profile can give an estimate of $\alpha_{D(\lambda)}$. FIG. 2 illustrates also the fact that the power value $log(P(CD_0))$ is obtained at the beginning of a linear segment S5 between breakpoints B4 and B5 for the accumulated chromatic dispersion value:

$$CD_0 = CD(z_0)$$

and

$$log\big(P(CD_0)\big) = log\left(\frac{n_2}{A_{eff}}\right) - lo\, g(\lambda) + log(2\pi)$$

and that the coordinates of a point on the linear segment S5 between B4 and B5 are $CD(\lambda)$ and $log(P(CD))$. For the start point B4 the coordinates are $CD_0$ and $log(P(CD_0))$.

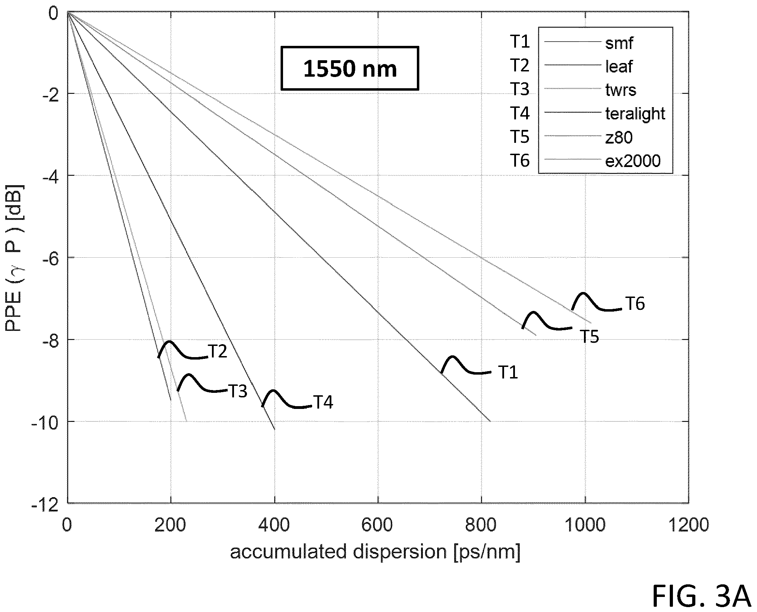

FIG. 3A shows typical slope values $\alpha_{D(\lambda)}$ for different fiber types at $\lambda$ =1550 nm.

In FIG. 3A the quantity $\gamma \cdot P$ is plotted as a function of the accumulated chromatic dispersion for an ideal 50km-long fiber without any anomalies, where different fiber types are used:

- fiber type T1 corresponds to "smf" (SMF-28 Ultra of Corning ®);
- fiber type T2 corresponds to "leaf" (LEAF optical fiber of Corning ®);
- fiber type T3 corresponds to "twrs" (TrueWave RS fiber of OFS ®;
- fiber type T4 corresponds to "teralight" (TeraLight optical fiber of Draka);
- fiber type T5 corresponds to "z80" (Z Fiber LL, Sumitomo®);
- fiber type T6 corresponds to "ex2000" (Vascade EX2000 of Corning ®).

While there is no significant difference of the attenuation constant $\alpha$ (expressed in $km^{-1}$) among different standardized fiber types, one can note the clear difference of the dispersion-normalized attenuation constant $-\alpha_{D(\lambda)}$ (i.e. the slope in $ps^{-1} \cdot nm$ in the longitudinal power profile) for each fiber type , as defined in equation (6). Therefore this slope $-\alpha_{D(\lambda)}$ or $\alpha_{D(\lambda)}$ is a discriminating parameter that enables to distinguish between fiber types.

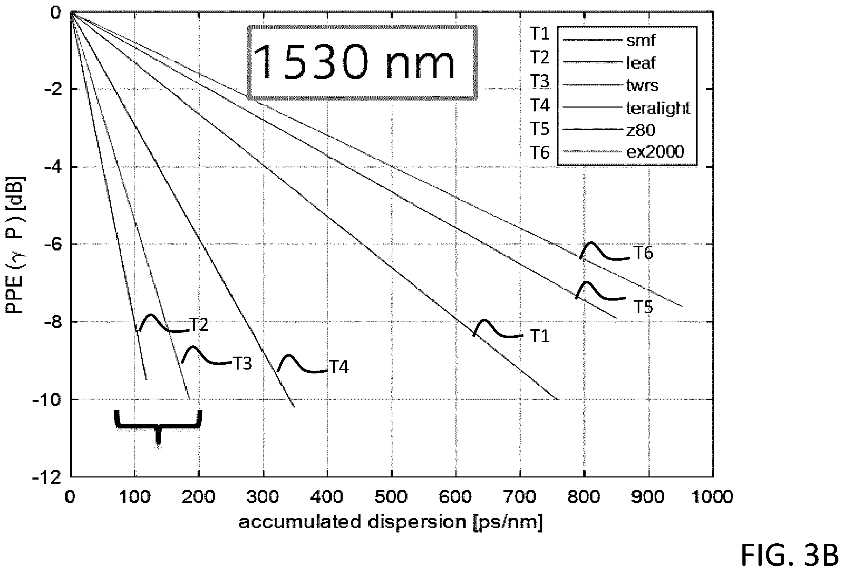

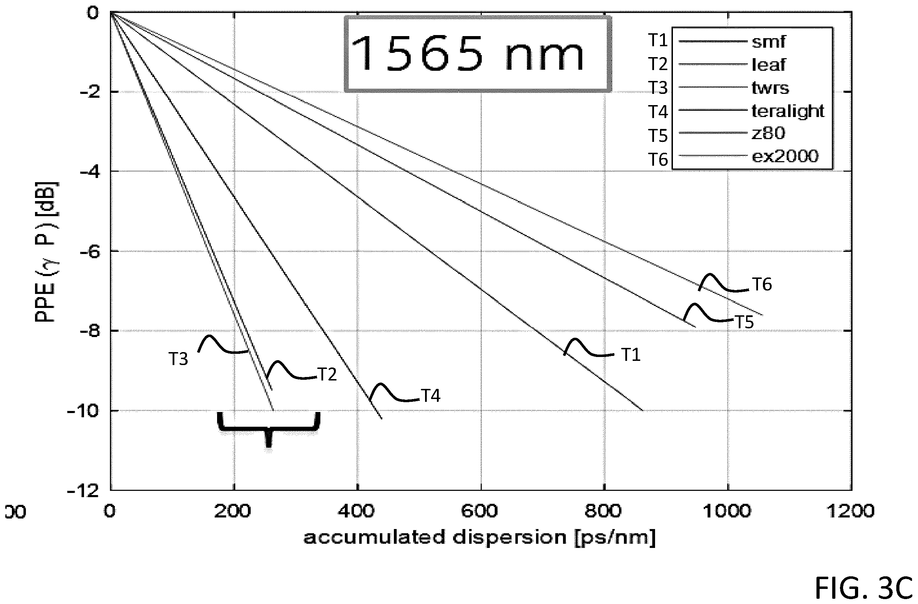

In FIGS. 3B and 3C, the same curves were computed at different wavelengths at $\lambda$ =1530 nm and at $\lambda$ =1565 nm respectively, generating PPE-like profiles obtained for different optical channels based on corresponding CRs. One can note that the wavelength dependency enables to distinguish between different "standardized" fiber types. For example, by comparing FIG. 3A with FIG. 3B, one can note that at $\lambda$ =1530 the distinction between fiber type T2 and T3 is better than at $\lambda$ =1550 and nearly impossible at A =1565.

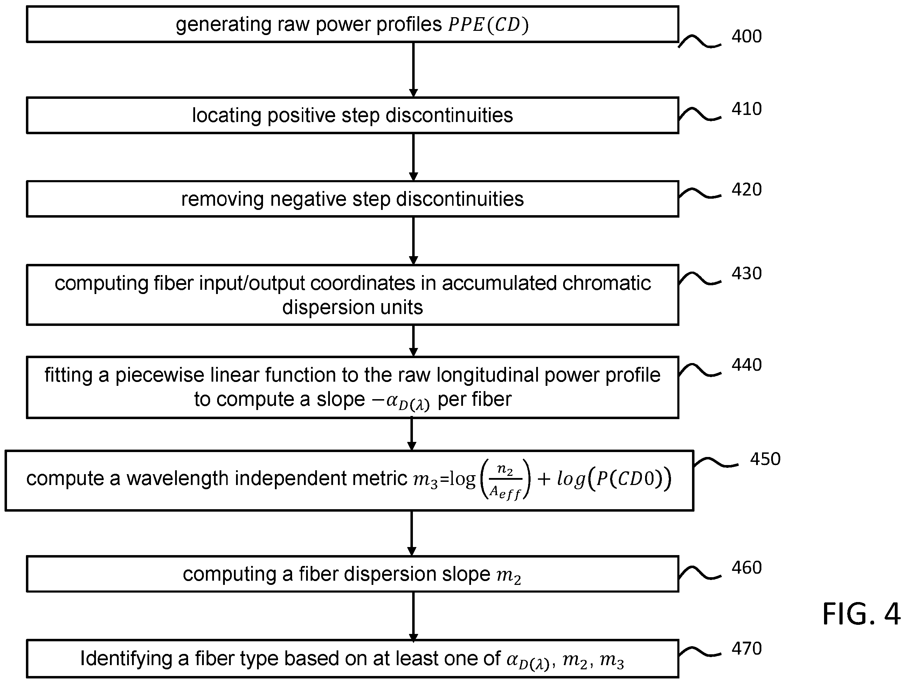

FIG. 4 shows a flowchart of a method for fiber type identification procedure according to one or more example embodiments. The steps of the method may be implemented by an apparatus, e.g. by optical network monitor or optical network monitoring device.

While the steps are described in a sequential manner, the man skilled in the art will appreciate that some steps may be omitted, combined, performed in different order and / or in parallel.

In step 400, one or more raw power profiles $PPE(CD)$ as a function of the accumulated dispersion are generated for an optical link and for several optical channels corresponding to respective central wavelengths.

In step 410, for each raw power profile, amplifier coordinates in CD units are determining by locating the positive step discontinuities of the raw power profile $PPE(CD)$ function, e.g. by calculating the derivative of the power profile (expressed on a logarithmic scale, i.e. computing the logarithmic derivative) and finding its zero crossing points $CD_l = CD(z_l)$, $l = 1, \ldots, N$ from a negative value to a positive value and from a positive value to a negative value for an optical link with $N$ amplifiers.

In step 420, anomalies corresponding to power losses (e.g. lumped losses) may be removed in the raw power profile $PPE(CD)$. This can be done after having identified loss coordinates in CD units by locating the negative step discontinuities of the raw power profile $PPE(CD)$ function, e.g. by calculating the derivative of the power profile and finding its breakpoints between two negative slope values.

A negative step discontinuity can be removed in the raw power profile $PPE(CD)$ for example by adding a positive power offset to the portion of the raw power profile that starts at the negative step discontinuity, where the positive power offset is equal to the height of the power step. This allows to have a continuous linear segment (of constant slope) in the raw power profile $PPE(CD)$ for each fiber. This allows also to get a better fit in step 440, as the slope computed for a given fiber may be computed over at least two linear segments: a first linear segment (see segment S4 in FIG. 1) of the longitudinal power profile that ends at the negative step discontinuity (see breakpoint B4 in FIG. 1) of and a second linear segment (see segment S5 in FIG. 1) of the longitudinal power profile that starts at the negative step discontinuity.

In step 430, for each fiber, input/output coordinates in accumulated chromatic dispersion units are determined, e.g. by calculating a difference (in accumulated chromatic dispersion units) between two breakpoints: thus identifying a continuous linear segment in the raw power profile $PPE(CD)$ for each fiber in the optical link.

In step 440, a piecewise linear function is fitted to the raw power profile $PPE(CD)$. The resulting piecewise linear function denoted as $PPE_{da}(CD)$ can be calculated iteratively to minimize the number of regions and fight noise accumulation.

By a linear fit of each continuous linear segment, a profile slope $-\alpha_{D(\lambda)}$ (in dB) of the piecewise linear function $PPE_{da}(CD)$ is obtained for each fiber, the profile slope

- $\alpha_{D(\lambda)}$ being expressed in units of 1/(ps/nm). The profile slope corresponds to the derivative of $PPE_{da}(CD)$ and the logarithmic derivative of the quantity ($\gamma \cdot P$). As the profile slope
- $\alpha_{D(\lambda)}$ varies with the wavelength, it is computed for each optical channel or its central wavelength $\lambda$.

In step 450, the height of each positive power step (corresponding to amplifier locations or the beginning of each fiber) in $PPE_{da}(CD)$ is, according to equation (7):

$$log(\gamma P(CD_0)) = log\left(\frac{n_2}{A_{eff}}\right) - log(\lambda) + log(2\pi) + log\big(P(CD_0)\big) \qquad (8)$$

and can be used to estimate a value of $\gamma$ per fiber, after removing the dependence on the central wavelength $\lambda$. A wavelength independent metric $m_3$ is computed:

$$m_3 = log\left(\frac{n_2}{A_{eff}}\right) + log\big(P(CD_0)\big) \qquad (9)$$

where $A_{eff}$ is an effective area of the fiber, $n_2$ is a nonlinear-index coefficient of the fiber, and $P(CD_0)$ is the optical power at the breakpoint (e.g. at the amplifier output) of the power profile corresponding to the start of the fiber.

In one embodiment, an averaged version of $m_3$ may be calculated if the amplifier has a sufficiently flat gain spectrum for the M analyzed optical channels as

$$m_4 = \frac{1}{M}\sum_{l=1}^{M}\left(m_3^{(l)}\right)$$

where $m_3^{(l)}$ is the estimation of $m_3$ for the optical channel $l$ with central wavelength $\lambda_l$. After detection of the standardized fiber types, the quantities $m_3^{(l)}$ corrected by the standard values of $n_2$ and $A_{eff}$, may also be used to assess the gain spectra (e.g. the variation of the gain as a function of the wavelength) of the amplifiers in the optical link based on equation (8).

In step 460, the profile slope values $-\alpha_{D(\lambda)}$ obtained for several wavelengths are used to compute $m_1(\lambda_l) = -\alpha_{D(\lambda)}$ and the inverse $m_1^{-1}(\lambda_l) \approx \frac{D(\lambda)}{\alpha}$. A linear fit of the quantities $m_1^{-1}$ as a function of the wavelength is performed to extract the fiber dispersion slope (i.e. the first order derivative) D' with respect to the wavelength, as defined by equations (4) and (6) and compute a wavelength independent metric $m_2 = D'/D$.

In step 470, a fiber type may be identified based on at least one of $m_1$, $m_3$ and $m_2$.

The wavelength dependent metric $m_1$ may be used for fiber identification and distinction in many cases, as illustrated for example by FIGS. 3A-3C.

Further an estimate of the fiber length L (in km) may be determined based on equations (3) and the determined fiber type average specification "$D(\lambda)$", using accumulated chromatic dispersion values $CD(z_1), CD(z_0)$ at the start and the end of the fiber:

$$L = z_1 - z0 = \frac{CD(z_1) - CD(z_0)}{D(\lambda)}$$

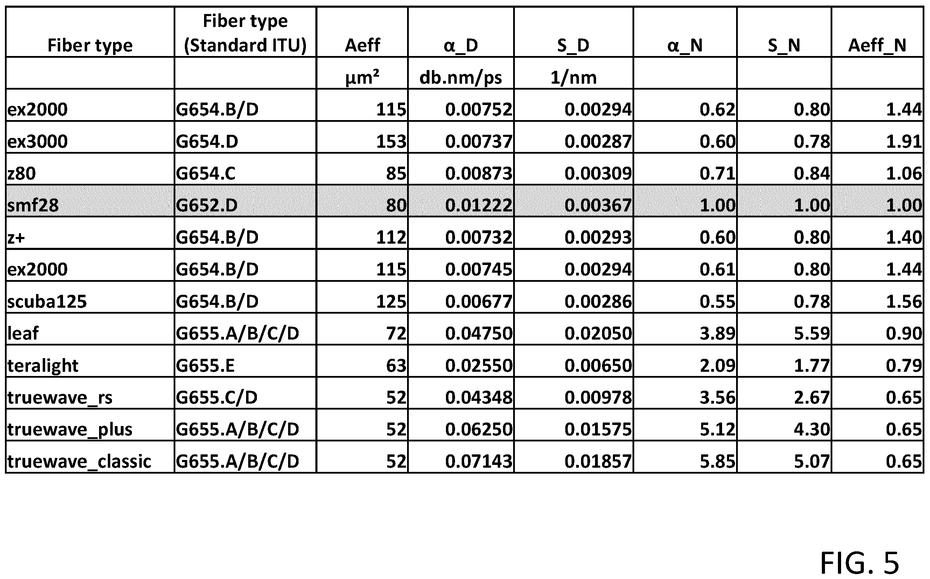

The wavelength independent metrics $m_3$ and $m_2$ provide additional information to distinguish fiber types. By combining all metrics $m_1$, $m_3$ and $m_2$ a discrimination between different standardized fiber types can be performed very accurately, e.g. based on known values of characterising parameters as illustrated by the table in FIG. 5.

FIG. 5 is a table showing characterising parameters of fiber types according to examples. The respective commercial name and vendor of these fiber types are indicated in the table below:

| Fiber Type | Commercial Name | Vendor |
|---|---|---|
| ex2000 | Vascade EX2000 | Corning [®] |
| ex3000 | Vascade EX3000 | Corning [®] |
| z80 | Z Fiber LL | Sumitomo [®] |

(continued)

| Fiber Type | Commercial Name | Vendor |
|---|---|---|
| smf28 | Single Mode Fiber 28 | Corning [®] |
| z+ | Z plus | Sumitomo [®] |
| scuba125 | TeraWave SCUBA 125 | OFS [®] |
| leaf | LEAF optical fiber | Corning [®] |
| teralight | TeraLight | Draka [®] |
| truewave_rs | TrueWave Reduced Slope | OFS [®] |
| truewave_plus | TrueWave + | Lucent [®] |
| truewave_classic | TrueWave Classic | Lucent [®] |

The table includes typical value for few fiber types: $m_1$ = $-\alpha_D$: dispersion-normalized attenuation constant in $dB \cdot (ps^{-1}) \cdot nm$ units (here computed at 1550 nm); $m_2$ = $S_D$ : fiber dispersion slope in 1/nm unit and $A_{eff}$ is an effective area in $\mu m^2$. The non linear-index coefficient n2 is approximately constant for all fiber types considered here. The ratio n2/Aeff may then be determined based on the equation (9) and the effective area may be determined from this ratio using the known value for n2.

In the table, the columns $\alpha_N$, $S_N$, $A_{effN}$ give the values normalized over the corresponding value $\alpha_D, S_D, A_{eff}$ for "SMF28" fiber type. The normalized values allow to illustrate the discrimination capacity brought by the above metrics.

As can be seen from this table, a triplet ($\alpha_D, S_D, A_{eff}$) fully characterizes a fiber type. The dispersion-normalized attenuation constant $\alpha_D$ (or its normalized version $\alpha_N$) allows by itself a first level of discrimination, but a distinction between two close fiber types, e.g. "ex2000" and "ex3000", might be difficult since the dispersion-normalized attenuation constants for two types differ only by 0.00015 dB.nm/ps. Here the use of the effective area $A_{eff}$ allows a clear distinction between "ex2000" and "ex3000" types.

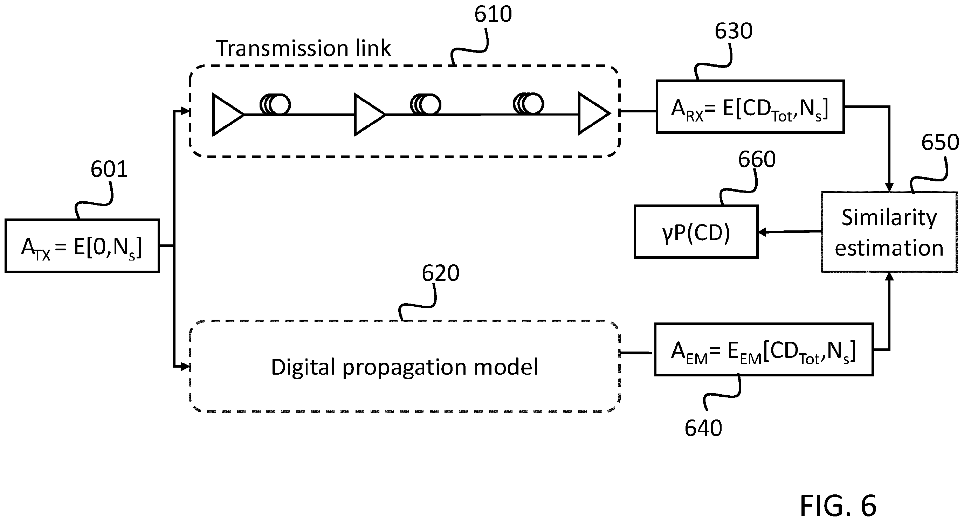

FIG. 6 shows a block diagram of a system for generating a raw longitudinal power profile 660 of the optical link as a function of accumulated chromatic dispersion according to an example.

Several analysis methods can be used to compute the power profile 660 as a function of the chromatic dispersion. All the methods rely on a common approach which exploit the non-commutativity of the chromatic dispersion phenomena and the non-linearities occurring in optical fibre to deduce an estimate optical power at a given longitudinal position along the fibre.

The digital PPE-like profile 660 is generated as a function of the accumulated CD and is denoted as $PPE(CD)$ = $\gamma P(CD)$.

As shown by FIG. 6, for a target optical link 610, a digital propagation model 620 that emulates the optical link 610 is generated, where the digital propagation model 620 accounts for chromatic dispersion and non-linearities occurring in the optical link 610. The digital propagation model 620 generates an optical signal $A_{EM}[CD,N_s]$ for one or a plurality of cumulated chromatic dispersion values CD for respective longitudinal position(s).

An input signal $A_{TX}$ = $E[0,N_s]$ 601 (with CD=0), where $N_s$ is the number of samples, is transmitted through the transmission link and through the model 620. At the output of the transmission link 610, a first optical signal 630 $A_{RX}$= $E[CD_{Tot},N_s]$ is detected, where $CD_{Tot}$ is the accumulated CD at the output of the transmission link. At the output of the model 620, a second optical signal 650 $A_{EM}$=$E_{EM}[CD_{Tot},N_s]$ is generated for the given CD value $CD_{Tot}$, where the second optical signal 650 is a partially correct digital replication of the first optical signal 630.

Then a similarity estimation 650 is performed by comparing the first and second optical signals 630 and 650. This similarity estimation 650 may be performed based on various methods: a correlation-based method, a fitting optimization method, etc. The output of the similarity estimation 650 is equal or proportional to $\gamma P(CD)$ for the value of the $CD_{Tot}$ applied by the model 620. The similarity estimation is performed for a set of CD values to cover the length of the transmission link.

Parameters of the digital propagation model 620 may be varied until the best similarity between the first optical signal 630 and the second optical signal 650 is found. Then the digital propagation model 620 with the best similarity is used to compute the power profile as a function of the chromatic dispersion for this transmission link.

The above simulation steps may be performed for several wavelengths of the input optical signal 601 such that a power profile is obtained for each of these wavelengths.

The emulated propagation model 620 may be replaced by a digital "back-propagation model" using as input the received signal $A_{RX}$= $E[CD_{Tot},N_s]$.

A correlation-based method searches for correlation between the first optical signal with the second. An example correlation-based method is disclosed in [2]. More advanced methods [2] take advantage of the digital spectrum filtering to select the correlation of interest and enhanced the accuracy of the power profile.

A similarity estimation by fitting the received sampled noise, created by the chromatic dispersion and non-linearities occurring in the optical link, with the second optical signal and using a more realistic propagation model 620 leads to more accurate results.

The digital propagation model 620 may be based on eRP1 (enhanced Regular Perturbation at First Order) or SSFM (Split Step Fourier Method).

The fitting methods may be based on MMSE (Minimum Mean Square Estimation) (MMSE) computation [4] or NLLS (Non-Linear Least Square) computation [3], [5] with gradient descent.

All these similarity estimation methods are mathematically adapted such that the longitudinal position along the axis is replaced by the chromatic dispersion and the parameters used therein may be consequently rescaled. For some of these methods, the rescaling is almost a drop-in replacement (e.g. in correlation-based methods which are intrinsically proportional to chromatic dispersion) or would require more advance step to get a closed-from formula (like in MMSE based). In between, fitting optimisation methods are the most direct approach where the mathematical expression of the propagation model is adapted (e.g. the Non-linear Schroedinger equation or the Manakov equation) to express the equations of the propagation model as a function of the chromatic dispersion.

For instance, the Manakov-PMD equation given in [3]:

$$\frac{\partial A}{\partial z} = -j\frac{\beta(z)}{2}\frac{\partial^2 A}{\partial t^2} - \frac{\alpha(z)}{2}A + j\frac{8}{9}\gamma(z) \cdot |A|^2 A$$

can be re-written as a function of cumulated dispersion $\beta_c = \beta \cdot z$ in a single fiber type domain as:

$$\frac{\partial A}{\partial \beta_c} = -\frac{1}{2}\left(j\frac{\partial^2}{\partial t^2} + \alpha_D\right)A + j\frac{8}{9}\gamma_D \cdot |A|^2 A$$

where $\alpha_D = \frac{\alpha}{\beta}$ and $\gamma_D = \frac{\gamma}{\beta}$ are absorption and non-linear fiber coefficient normalized by the chromatic dispersion parameters. The split step Fourier methods can then be applied to solve the equation and optimize the parameters of the propagation in order to determine the power profile as a function of the cumulated dispersion.

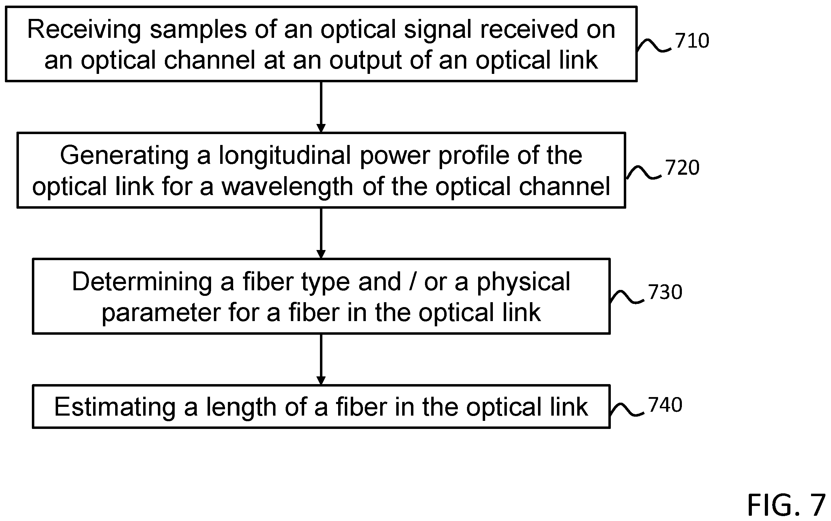

FIG. 7 shows a flowchart of a method according to one or more example embodiments. The steps of the method may be implemented by an apparatus, e.g. by optical network monitor or optical network monitoring device.

As used herein, an "optical network monitor" or "optical network monitoring device" may refer to a network entity to which data is transmitted for analysis, which has a view of at least a part of the network and is configured to perform one or more monitoring task(s). This can be for example a network controller or a sub-system/sub-entity implemented in software within any other network entity. The "optical network monitor" or "optical network monitoring device" may be part of an optical receiver (e.g. optical coherent receiver) or be a physically distinct device.

While the steps are described in a sequential manner, the man skilled in the art will appreciate that some steps may be omitted, combined, performed in different order and / or in parallel.

In step 710, samples of an optical signal received on an optical channel at an output of an optical link are obtained, where the optical link comprising one or more fibers connected in series.

In step 720, a longitudinal power profile of the optical link for a wavelength of the optical channel is generated from the samples of the optical signal. Any embodiment disclosed herein may be used.

The longitudinal power profile represents a scaled optical power as a function of accumulated chromatic dispersion, the scaled optical power being optical power $P$ times a coefficient which is constant over the length of each of the one or more fibers.

The coefficient may be a fiber non-linear coefficient $\gamma$. The coefficient may be defined, for a fiber in the optical link, as $\gamma = \frac{2\pi}{\lambda} \cdot \frac{n_2}{A_{eff}}$ where $\lambda$ is the wavelength of the optical channel, $A_{eff}$ is an effective area of the fiber, and $n_2$ is the nonlinear-index coefficient $n_2$ of the fiber.

The logarithm of the scaled optical power in the longitudinal power profile is a piecewise linear function of the accumulated chromatic dispersion.

Generating the optical power profile from the samples may comprise: generating a raw longitudinal power profile from the samples and fitting a piecewise linear function to the raw longitudinal power profile.

In step 730, a fiber type and / or a physical parameter of the fiber may be determined based on the longitudinal power profile. Any embodiment disclosed herein may be used.

The fiber type may be identified based on a logarithmic derivative $-\alpha_{D(\lambda)}$ of the scaled optical power with respect to the accumulated chromatic dispersion. Alternatively or in combination, a dispersion-normalized attenuation constant $\alpha_{D(\lambda)}$ may be computed for one or more fiber in the optical link based on a logarithmic derivative of the scaled optical power with respect to the accumulated chromatic dispersion.

The logarithmic derivative may be computed for a given fiber over at least one linear segment of the longitudinal power profile.

A negative step discontinuity may be detected in the longitudinal power profile and the logarithmic derivative may be computed over a first linear segment of the longitudinal power profile that ends at the negative step discontinuity and a second linear segment of the longitudinal power profile that starts at the negative step discontinuity.

The fiber type may be characterized by an effective area, a dispersion-normalized attenuation constant and a fiber dispersion slope.

The fiber type may be identified based on at least one of a first wavelength independent metric $m_3$ and a second wavelength independent metric $m_2$.

$$m_3 = \log\left(\frac{n_2}{A_{eff}}\right) +$$

The first wavelength independent metric may be $log(P(CD_0))$ and may be computed for one or more fibers in the optical link, where $A_{eff}$ is an effective area of the fiber, $n_2$ is a nonlinear-index coefficient of the fiber, and $P(CD_0)$ is the optical power at a breakpoint of the longitudinal power profile that corresponds to the start of the fiber.

A wavelength dependent metric may be computed for one or more fibers in the optical link, where the wavelength dependent metric represents an inverse of a logarithmic derivative of the scaled optical power with respect to the accumulated chromatic dispersion as a function of wavelength. The derivative of the wavelength dependent metric with respect to the wavelength may be computed to generate the second wavelength independent metric $m_2$.

In step 740, a length of the fiber may be estimated based on a chromatic dispersion parameter of the identified fiber type and chromatic dispersion accumulated in the fiber. Any embodiment disclosed herein may be used.

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes.

Although a flow chart may describe operations as a sequential process, many of the operations may be performed in parallel, concurrently or simultaneously. Also some operations may be omitted, combined or performed in different order. A process may be terminated when its operations are completed but may also have additional steps not disclosed in the figure or description. A process may correspond to a method, function, procedure, subroutine, subprogram, etc. When a process corresponds to a function, its termination may correspond to a return of the function to the calling function or the main function.

Each described function, engine, block, step described herein can be implemented in hardware, software, firmware, middleware, microcode, or any suitable combination thereof.

When implemented in software, firmware, middleware or microcode, instructions to perform the necessary tasks may be stored in a computer readable medium that may be or not included in a host device or host system. The instructions may be transmitted over the computer-readable medium and be loaded onto the host device or host system. The instructions are configured to cause the host device or host system to perform one or more functions disclosed herein. For example, as mentioned above, according to one or more examples, at least one memory may include or store instructions, the at least one memory and the instructions may be configured to, with at least one processor, cause the host device or host system to perform the one or more functions. Additionally, the processor, memory and instructions, serve as means for providing or causing performance by the host device or host system of one or more functions disclosed herein.

The host device or host system may be a general-purpose computer and / or computing system, a special purpose computer and / or computing system, a programmable processing apparatus and / or system, a machine, etc. The host device or host system may be or include or be part of: a user equipment, client device, mobile phone, laptop, computer, network element, data server, network resource controller, network apparatus, router, gateway, network node, computer, cloud-based server, web server, application server, proxy server, etc.

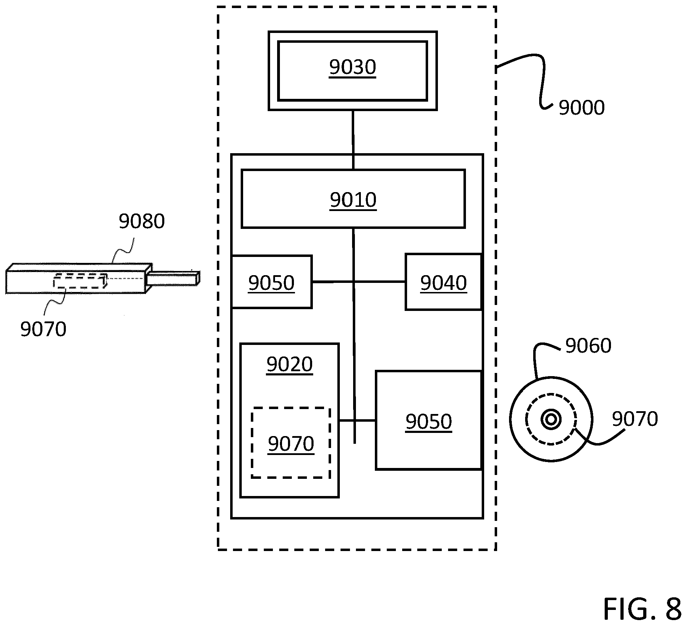

FIG. 8 illustrates an example embodiment of an apparatus 9000. The apparatus 9000 may be an optical network monitor or optical network monitoring device as disclosed herein. The apparatus 9000 may be used for implementing one or more functions of an optical network monitor disclosed herein. The apparatus 9000 may include processing circuitry for performing one or more or all steps of a method disclosed herein, for example by reference to FIG. 6 or 7.

The apparatus 9000 may include at least one processor 9010 and at least one memory 9020. The apparatus 9000 may include one or more communication interfaces 9040 (e.g. network interfaces for access to a wired / wireless network, including Ethernet interface, WIFI interface, etc) connected to the processor and configured to communicate via wired / non wired communication link(s). The apparatus 9000 may include user interfaces 9030 (e.g. keyboard, mouse, display screen, etc) connected with the processor. The apparatus 9000 may further include one or more media drives 9050 for reading a computer-readable storage medium (e.g. digital storage disc 9060 (CD-ROM, DVD, Blue Ray, etc), USB key 9080, etc). The processor 9010 is connected to each of the other components 9020, 9030, 9040, 9050 in order to control operation thereof.

The memory 9020 may include at least one of a random access memory (RAM), cache memory, non-volatile memory, backup memory (e.g., programmable or flash memories), read-only memory (ROM), a hard disk drive (HDD), a solid state drive (SSD) or any combination thereof. The ROM of the memory 9020 may be configured to store, amongst other things, an operating system of the apparatus 9000 and / or one or more computer program code of one or more software applications. The RAM of the memory 9020 may be used by the processor 9010 for the temporary storage of data.

The processor 9010 may be configured to store, read, load, execute and/or otherwise process instructions 9070 stored in a computer-readable storage medium 9060, 9080 and / or in the memory 9020 such that, when the instructions are executed by the processor, causes the apparatus 9000 to perform one or more or all steps of a method described herein for the concerned apparatus 9000.

The instructions may correspond to program instructions or computer program code. The instructions may include one or more code segments. A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

When provided by a processor, the functions may be provided by a single dedicated processor, by a single shared processor, or by a plurality of individual processors, some of which may be shared. The term "processor" should not be construed to refer exclusively to hardware capable of executing software and may implicitly include one or more processing circuits, whether programmable or not. A processor or likewise a processing circuit may correspond to a digital signal processor (DSP), a network processor, an application specific integrated circuit (ASIC), a field programmable gate array (FPGA), a System-on-Chips (SoC), a Central Processing Unit (CPU), an arithmetic logic unit (ALU), a programmable logic unit (PLU), a processing core, a programmable logic, a microprocessor, a controller, a microcontroller, a microcomputer, a quantum processor, any device capable of responding to and/or executing instructions in a defined manner and/or according to a defined logic. Other hardware, conventional or custom, may also be included. A processor or processing circuit may be configured to execute instructions adapted for causing the host device or host system to perform one or more functions disclosed herein for the host device or host system.

A computer readable medium or computer readable storage medium may be any tangible storage medium suitable for storing instructions readable by a computer or a processor. A computer readable medium may be more generally any storage medium capable of storing and/or containing and/or carrying instructions and/or data. The computer readable medium may be a non-transitory computer readable medium. The term "non-transitory", as used herein, is a limitation of the medium itself (i.e., tangible, not a signal) as opposed to a limitation on data storage persistency (e.g., RAM vs. ROM).

A computer-readable medium may be a portable or fixed storage medium. A computer readable medium may include one or more storage device like a permanent mass storage device, magnetic storage medium, optical storage medium, digital storage disc (CD-ROM, DVD, Blue Ray, etc), USB key or dongle or peripheral, a memory suitable for storing instructions readable by a computer or a processor.

A memory suitable for storing instructions readable by a computer or a processor may be for example: read only memory (ROM), a permanent mass storage device such as a disk drive, a hard disk drive (HDD), a solid state drive (SSD), a memory card, a core memory, a flash memory, or any combination thereof.

In the present description, the wording "means configured to perform one or more functions" or "means for performing one or more functions" may correspond to one or more functional blocks comprising circuitry that is adapted for performing or configured to perform the concerned function(s). The block may perform itself this function or may cooperate and / or communicate with other one or more blocks to perform this function. The "means" may correspond to or be implemented as "one or more modules", "one or more devices", "one or more units", etc. The means may include at least one processor and at least one memory including computer program code, wherein the at least one memory and the computer program code are configured to, with the at least one processor, cause an apparatus or system to perform the concerned function(s).

As used in this application, the term "circuitry" may refer to one or more or all of the following:

(a) hardware-only circuit implementations (such as implementations in only analog and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device.

The term circuitry or processing circuitry may cover digital signal processor (DSP) hardware, network processor, application specific integrated circuit (ASIC), field programmable gate array (FPGA), etc. The circuitry may be or include, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

The circuitry may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via one or more communication networks.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

While aspects of the present disclosure have been particularly shown and described with reference to the embodiments above, it will be understood by those skilled in the art that various additional embodiments may be contemplated by the modification of the disclosed machines, systems and methods without departing from the scope of what is disclosed. Such embodiments should be understood to fall within the scope of the present disclosure as determined based upon the claims and any equivalents thereof.

## LIST OF MAIN ABBREVIATIONS

| UE | User Equipment |
|----|----------------|
| CD | Chromatic Dispersion |
| CR | Chunk recording |
| EDFA | Erbium doped fiber amplifier |
| GVD | group velocity dispersion |
| PPE | Power profile estimation |
| SNR | Signal to noise ratio |

## CITED REFERENCES

[1] T. Sasai, E. Yamazaki, and Y. Kisaka, "Performance limit of fiber-longitudinal power profile estimation methods," Journal of Lightwave Technology, Vol 41, No. 11, 2023, pp. 1-13.
[2] C. Hahn and Z. Jiang, "On the spatial resolution of location-resolved performance monitoring by correlation method," in Optical Fiber Communications (OFC), 2023.
[3] Sasai et al., "Digital Longitudinal Monitoring of Optical Fiber Communication Link.", JOURNAL OF LIGHTWAVE TECHNOLOGY, VOL. 40, NO. 8, April 15, 2022, p 2390.
[4] T. Sasai, E. Yamazaki, M. Nakamura, and Y. Kisaka, "Proposal of linear least squares for fiber-nonlinearity-based longitudinal power monitoring in multi-span link," in 2022 27th OptoElectronics and Communications Conference (OECC) and 2022 International Conference on Photonics in Switching and Computing (PSC), pp. 1-4.
[5] S. Gleb, P. Konstantin, J. Luo, and B. Zheng, "Fiber link anomaly detection and estimation based on signal nonlinearity", 2021, European Conference on Optical Communication (ECOC), pp. 1-4.

**Claims**

1. A method comprising:

    obtaining samples of an optical signal received on an optical channel at an output of an optical link, the optical link comprising one or more fibers connected in series;
    generating, from the samples of the optical signal, a longitudinal power profile of the optical link for a wavelength of the optical channel, wherein the longitudinal power profile indicates a scaled optical power as a function of accumulated chromatic dispersion, the scaled optical power being optical power P times a coefficient which is constant over the length of each of the one or more fibers.

2. The method of claim 1, wherein the method further comprises:
    determining a fiber type or a physical parameter of a fiber among the one or more fibers based on the longitudinal power profile.

3. The method of claim 2, wherein the fiber type is **characterized by** an effective area, a dispersion-normalized attenuation constant and a fiber dispersion slope.

4. The method of claim 2 or 3, wherein the method further comprises:
    estimating a length of the fiber based on a chromatic dispersion parameter of the identified fiber type and chromatic dispersion accumulated in the fiber.

5. The method of any one of the preceding claims, wherein a logarithm of the scaled optical power is a piecewise linear function of the accumulated chromatic dispersion.

6. The method of any one of the preceding claims, wherein generating the optical power profile from the samples comprises:

    generating a raw longitudinal power profile from the samples, and
    fitting a piecewise linear function to the raw longitudinal power profile.

7. The method of any one of the preceding claims, wherein the coefficient is a fiber non-linear coefficient $\gamma$.

8. The method of any one of the preceding claims, wherein the coefficient is defined, for a fiber among the one or more fibers, as $\gamma = \frac{2\pi}{\lambda} \cdot \frac{n_2}{A_{eff}}$. where $\lambda$ is the wavelength of the optical channel, $A_{eff}$ is an effective area of the fiber, and $n_2$ is the nonlinear-index coefficient $n_2$ of the fiber.

9. The method of any one of the preceding claims, comprising one or both of the following:

    computing a dispersion-normalized attenuation constant for a fiber among the one or more fibers based on a logarithmic derivative of the scaled optical power with respect to the accumulated chromatic dispersion; or
    identifying a fiber type based on a logarithmic derivative of the scaled optical power with respect to the accumulated chromatic dispersion.

10. The method of any one of the preceding claims, comprising:
    computing, for a fiber among the one or more fibers, a first wavelength independent metric representing

$$m_3 = \log\left(\frac{n_2}{A_{eff}}\right) + log\big(P(CD_0)\big)$$

, where $A_{eff}$ is an effective area of the fiber, $n_2$ is a nonlinear-index coefficient of the fiber, and $P(CD_0)$ is the optical power at a breakpoint of the longitudinal power profile.

**11.** The method of any one of the preceding claims, comprising:

computing, for a fiber among the one or more fibers, values of a wavelength dependent metric representing an inverse of a logarithmic derivative of the scaled optical power with respect to the accumulated chromatic dispersion as a function of wavelength; and
computing a derivative of the wavelength dependent metric with respect to the wavelength, the derivative representing a second wavelength independent metric $m_2$.

**12.** The method of claim 10 or 11, comprising:
identifying a fiber type based on at least one of the first wavelength independent metric $m_3$ and the second wavelength independent metric $m_2$.

**13.** The method of claim 9 or 11,
wherein the logarithmic derivative is computed over at least one linear segment of the longitudinal power profile.

**14.** The method of claim 9 or 11, comprising:

detecting a negative step discontinuity in the longitudinal power profile;
wherein the logarithmic derivative is computed over a first linear segment of the longitudinal power profile that ends at the negative step discontinuity and a second linear segment of the longitudinal power profile that starts at the negative step discontinuity.

**15.** An apparatus comprising processing circuitry for:

obtaining samples of an optical signal received on an optical channel at an output of an optical link, the optical link comprising one or more fibers connected in series;
generating, from the samples of the optical signal, a longitudinal power profile of the optical link for a wavelength of the optical channel, wherein the longitudinal power profile indicates a scaled optical power as a function of accumulated chromatic dispersion, the scaled optical power being optical power P times a coefficient which is constant over the length of each of the one or more fibers.

FIG. 1

FIG. 2

FIG. 3A

FIG. 3B

EP 4 539 358 A1

FIG. 3C

```
┌─────────────────────────────────────────────────────────────┐
│           generating raw power profiles $PPE(CD)$            │  ∿ 400
└─────────────────────────────────────────────────────────────┘
                              │
                              ▼
┌─────────────────────────────────────────────────────────────┐
│              locating positive step discontinuities          │  ∿ 410
└─────────────────────────────────────────────────────────────┘
                              │
                              ▼
┌─────────────────────────────────────────────────────────────┐
│              removing negative step discontinuities          │  ∿ 420
└─────────────────────────────────────────────────────────────┘
                              │
                              ▼
┌─────────────────────────────────────────────────────────────┐
│  computing fiber input/output coordinates in accumulated     │  ∿ 430
│              chromatic dispersion units                      │
└─────────────────────────────────────────────────────────────┘
                              │
                              ▼
┌─────────────────────────────────────────────────────────────┐
│  fitting a piecewise linear function to the raw longitudinal │  ∿ 440
│     power profile to compute a slope $-\alpha_{D(\lambda)}$ per fiber │
└─────────────────────────────────────────────────────────────┘
                              │
                              ▼
┌─────────────────────────────────────────────────────────────┐
│ compute a wavelength independent metric                      │  ∿ 450
│ $m_3 = \log\left(\frac{n_2}{A_{eff}}\right) + \log\left(P(CD0)\right)$ │
└─────────────────────────────────────────────────────────────┘
                              │
                              ▼
┌─────────────────────────────────────────────────────────────┐
│           computing a fiber dispersion slope $m_2$           │  ∿ 460
└─────────────────────────────────────────────────────────────┘
                              │
                              ▼
┌─────────────────────────────────────────────────────────────┐
│ Identifying a fiber type based on at least one of            │  ∿ 470
│        $\alpha_{D(\lambda)}$, $m_2$, $m_3$                   │
└─────────────────────────────────────────────────────────────┘
```

FIG. 4

| Fiber type | Fiber type (Standard ITU) | Aeff | α_D | S_D | α_N | S_N | Aeff_N |
|---|---|---|---|---|---|---|---|
| | | μm² | db.nm/ps | 1/nm | | | |
| ex2000 | G654.B/D | 115 | 0.00752 | 0.00294 | 0.62 | 0.80 | 1.44 |
| ex3000 | G654.D | 153 | 0.00737 | 0.00287 | 0.60 | 0.78 | 1.91 |
| z80 | G654.C | 85 | 0.00873 | 0.00309 | 0.71 | 0.84 | 1.06 |
| smf28 | G652.D | 80 | 0.01222 | 0.00367 | 1.00 | 1.00 | 1.00 |
| z+ | G654.B/D | 112 | 0.00732 | 0.00293 | 0.60 | 0.80 | 1.40 |
| ex2000 | G654.B/D | 115 | 0.00745 | 0.00294 | 0.61 | 0.80 | 1.44 |
| scuba125 | G654.B/D | 125 | 0.00677 | 0.00286 | 0.55 | 0.78 | 1.56 |
| leaf | G655.A/B/C/D | 72 | 0.04750 | 0.02050 | 3.89 | 5.59 | 0.90 |
| teralight | G655.E | 63 | 0.02550 | 0.00650 | 2.09 | 1.77 | 0.79 |
| truewave_rs | G655.C/D | 52 | 0.04348 | 0.00978 | 3.56 | 2.67 | 0.65 |
| truewave_plus | G655.A/B/C/D | 52 | 0.06250 | 0.01575 | 5.12 | 4.30 | 0.65 |
| truewave_classic | G655.A/B/C/D | 52 | 0.07143 | 0.01857 | 5.85 | 5.07 | 0.65 |

FIG. 5

EP 4 539 358 A1

**FIG. 6**

Receiving samples of an optical signal received on an optical channel at an output of an optical link ~710

Generating a longitudinal power profile of the optical link for a wavelength of the optical channel ~720

Determining a fiber type and / or a physical parameter for a fiber in the optical link ~730

Estimating a length of a fiber in the optical link ~740

FIG. 7

FIG. 8

EP 4 539 358 A1

Europäisches
Patentamt

European
Patent Office

Office européen
des brevets

# EUROPEAN SEARCH REPORT

**Application Number**

EP 23 30 6770

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHINZAKI RYU ET AL: "Optical Network Tomography: Demonstration of Anomaly Loss Monitoring and Fiber-Type Identification", 2023 OPTICAL FIBER COMMUNICATIONS CONFERENCE AND EXHIBITION (OFC), OSA, 5 March 2023 (2023-03-05), pages 1-3, XP034345755, DOI: 10.23919/OFC49934.2023.10117330 [retrieved on 2023-05-19] | 1-8,10, 15 | INV. H04B10/079 |
| A | * the whole document * | 9,11-14 | |
| A | SEVE EMMANUEL ET AL: "Automated Fiber Type Identification in SDN-Enabled Optical Networks", JOURNAL OF LIGHTWAVE TECHNOLOGY, IEEE, USA, vol. 37, no. 7, 1 April 2019 (2019-04-01), pages 1724-1731, XP011717465, ISSN: 0733-8724, DOI: 10.1109/JLT.2019.2896041 [retrieved on 2019-04-01] * the whole document * | 1-15 | |
| A | SASAI TAKEO ET AL: "Digital Longitudinal Monitoring of Optical Fiber Communication Link", JOURNAL OF LIGHTWAVE TECHNOLOGY, IEEE, USA, vol. 40, no. 8, 29 December 2021 (2021-12-29), pages 2390-2408, XP011905076, ISSN: 0733-8724, DOI: 10.1109/JLT.2021.3139167 [retrieved on 2021-12-29] * the whole document * | 1-15 | TECHNICAL FIELDS SEARCHED (IPC)  H04B |

The present search report has been drawn up for all claims

| Place of search | Date of completion of the search | Examiner |
|---|---|---|
| Munich | 12 March 2024 | Borsier, Celine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. SASAI** ; **E. YAMAZAKI** ; **Y. KISAKA**. Performance limit of fiber-longitudinal power profile estimation methods. *Journal of Lightwave Technology*, 2023, vol. 41 (11), 1-13
- **C. HAHN** ; **Z. JIANG**. On the spatial resolution of location-resolved performance monitoring by correlation method. *Optical Fiber Communications (OFC)*, 2023
- **SASAI et al.** Digital Longitudinal Monitoring of Optical Fiber Communication Link.. *JOURNAL OF LIGHTWAVE TECHNOLOGY*, 15 April 2022, vol. 40 (8), 2390
- **T. SASAI** ; **E. YAMAZAKI** ; **M. NAKAMURA** ; **Y. KISAKA**. Proposal of linear least squares for fiber-nonlinearity-based longitudinal power monitoring in multi-span link. *2022 27th OptoElectronics and Communications Conference (OECC) and 2022 International Conference on Photonics in Switching and Computing (PSC)*, 1-4
- **S. GLEB** ; **P. KONSTANTIN** ; **J. LUO** ; **B. ZHENG**. Fiber link anomaly detection and estimation based on signal nonlinearity. *European Conference on Optical Communication (ECOC)*, 2021, 1-4